# FASCICULE DE BREVET EUROPEEN

(11) **EP 1 879 420 B1**
(45) Date de publication et mention de la délivrance du brevet: **23.12.2009**
(21) Numéro de dépôt: 07013674.2
(22) Date de dépôt: 12.07.2007
(51) Int. Cl.: H04W 48/16

(54) **Procédé et dispositif de recherche d'appel en cours par une station mobile réceptrice d'un système de téléphonie mobile directe à accès multiple par division de temps**
Verfahren und Vorrichtung zur Suche von gerade laufenden Anrufen mittels einer Empfangsmobilstation eines Systems für direkten Mobilfunk mit Zeitmultiplexzugriff
Method and device for searching for a call in progress by a receiver mobile station of a direct mobile telephony system with multiple access by time division

(30) Priorité: 12.07.2006 FR 0606393
(43) Date de publication de la demande: 16.01.2008
(73) Titulaire: SAGEM COMMUNICATIONS SAS, 92848 Rueil Malmaison Cedex (FR)
(72) Inventeur: Dorion-Cousinat, Marc, 69009 Lyon (FR); De Graeve, Frédéric, 75017 Paris (FR); Dumont, Jérémie, 9119 Gif sur Yvette (FR)
(74) Mandataire: Maillet, Alain

(56) Documents cités:
- EP-A2- 0 713 345
- GB-A- 2 290 677
- US-B1- 6 236 649

## Description

La présente invention concerne un procédé et un dispositif de recherche d'appel en cours par une station mobile réceptrice d'un système de téléphonie mobile directe à accès multiple par division de temps.

La présente invention est décrite par la suite dans le cas d'un système de téléphonie mobile à accès multiple par division de temps, du type où les données utilisateur sont émises par les stations mobiles émettrices dans des multitrames utilisateur constituées des intervalles de temps de même ordre d'une pluralité de trames successives et où les données de calage en fréquence et de synchronisation en temps sont également émises par les stations mobiles émettrices dans une multitrame système. La présente invention n'est cependant pas limitée à ce type de système de téléphonie mobile à accès multiple par division de temps.

On rappelle ci-dessous le fonctionnement d'un système de téléphonie mobile à accès multiple par division de temps (Time Division Multiple Access) qui utilise une structure en multitrames. On considèrera également le cas particulier d'un système GSM afin de préciser ce fonctionnement. On entend par système GSM dans la suite de la présente description un système de téléphonie mobile qui est basé sur les normes bien connues du GSM (Global System for Mobile communication)

Dans un système de téléphonie mobile à accès multiple par division de temps, les données échangées sont transmises sous forme de données numériques dans des intervalles de temps (time slots : on utilisera le terme *slot* pour désigner un tel intervalle de temps car c'est le terme qui est utilisé par l'homme du métier. On l'écrira en italique pour toutefois marquer son origine anglosaxone).

L'accès multiple par division de temps (TDMA) permet à différents utilisateur de partager, au cours du temps, l'utilisation d'une bande de fréquence donnée, partage qui est défini par une trame, dite trame TDMA, qui fixe la disposition temporelle des *slots.*

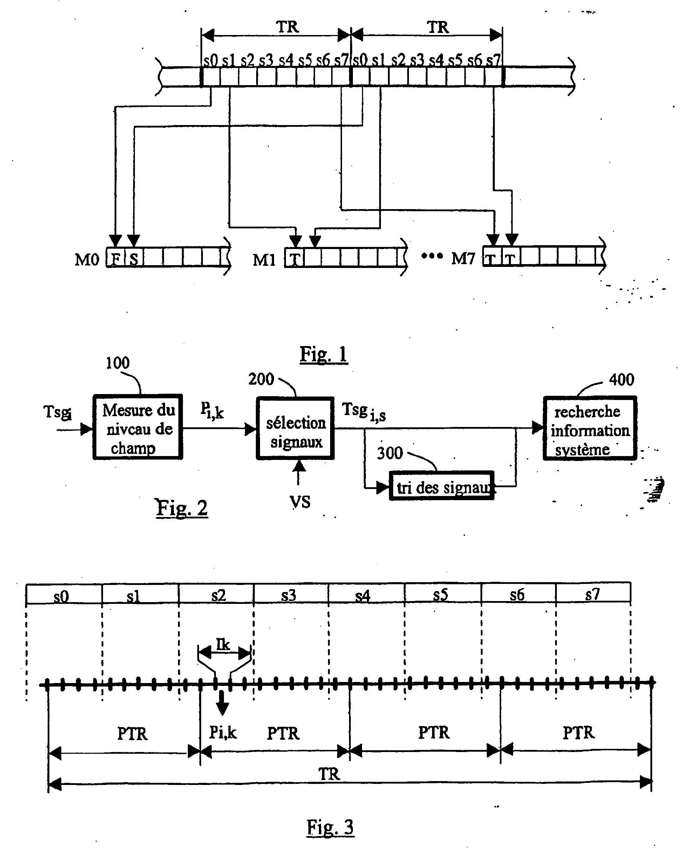

La trame TDMA est, dans le cas particulier d'un système GSM, un ensemble constitué de huit *slots* successifs notés s0 à s7 à la Fig. 1. La durée TR de la trame TDMA est alors au moins égale à la somme des durées de ces huit *slots.*

Une multitrame Mⱼ à NT trames est une structure qui est souvent utilisée pour permettre de repérer un *slot* sur une échelle supérieure à la durée de la trame TDMA. Cette structure est définie sur une succession de *slots* sⱼ d'un même rang donné j de NT trames TDMA successives, c'est-à-dire sur un canal physique. Comme illustré à la Fig. 1, les *slots* s₀ de trames successives forment la multitrame M₀, les *slots* s₁ des trames successives forment la multitrame M₁, etc.

Dans le cas particulier d'un système GSM, il existe deux structures de multitrame Mⱼ: celle regroupant 26 *slots* sⱼ et celle regroupant 51 *slots* sⱼ.

De plus, dans le cas particulier d'un système GSM, pour permettre à une station mobile de se raccorder à la station de base la plus favorable, de s'y caler en fréquence et de s'y synchroniser, une voie balise, portée par la seule multitrame M₀ d'une fréquence particulière parmi toutes les fréquences disponibles, est également mise en oeuvre. Nous appellerons dans la suite de la présente description multitrame système ce type de multitrame.

On rappelle ici que cette voie balise est émise, par chaque station de base du système, sur une fréquence particulière, dite fréquence balise, choisie parmi l'ensemble des fréquences porteuses attribuées à la station mobile concernée.

La voie balise d'un système GSM comprend les canaux logiques suivants émis en diffusion : le canal FCCH (Frequency Correction CHannel), le canal SCH (Synchronisation CHannel) et le canal BCCH (Broadcast Control CHannel). Le canal FCCH est émis dans le *slot* s₀ de quelques trames prédéfinies, par exemple les seules trames 0, 10, 20, 30 et 40 d'une multitrame à 51 trames (marqué F à la Fig. 1). Le canal SCH est émis dans le *slot* s₀ de la trame qui suit celle où a été émis le canal FCCH, par exemple dans les seules trames 1, 11, 21, 31 et 41 d'une multitrame à 51 trames (marqué S à la Fig. 1).

Dans un système GSM, pour la transmission des données utilisateur, une station mobile dispose de deux *slots* respectivement émis sur deux porteuses de fréquences différentes : l'une affectée à la transmission dans le sens montant (station mobile vers station de base) et l'autre affectée à la transmission dans le sens descendant (station de base vers station mobile). Ces données utilisateur (marquées T à la Fig. 1) peuvent être des données utiles et elles sont alors transmises dans des canaux logiques appelés TCH (Traffic CHannel) ou être des données de signalisation et elles sont alors transmises dans des canaux logiques appelés SDCCH. Des canaux logiques de contrôle peuvent accompagner ces canaux logiques : SACCH (Slow Associated Control CHannel) et FACCH (Fast Associated Control CHannel). Ces données étant spécifiques à l'utilisateur, les canaux logiques qui les portent sont dits canaux dédiés. Tous ces canaux logiques dédiés sont portés par les multitrames M₀ à M₇ (exceptée la multitramme M₀ de la fréquence balise) que nous nommerons, dans la suite de la présente description, multitrames utilisateur. Par abus de langage, on qualifiera également par la suite ces multitrames de réservées lorsque les canaux logiques dédiés qu'elles portent transmettent des données correspondantes à un appel en cours.

Dans un système GSM, lorsqu'elle est mise sous tension, une station mobile scrute l'ensemble des fréquences porteuses qu'elle reçoit pour y chercher un signal qui correspond à un canal FCCH. Une fois celui-ci trouvé, elle peut, d'une part, ajuster la fréquence de la porteuse reçue, mais aussi, d'autre part, en déduire une position temporelle, si bien qu'elle peut se caler sur la trame reçue sur cette fréquence porteuse. Elle peut alors lire, à la trame suivante, dans le *slot* s0 correspondant, le canal SCH dans lequel elle trouvera toutes les données nécessaires pour parfaire son calage et sa synchronisation temporelle sur les trames. Elle peut alors lire le canal BCCH qui la renseignera sur les caractéristiques de la station de base avec laquelle elle est synchronisée et les méthodes pour y accéder, ainsi que les caractéristiques et méthodes des stations de base voisines.

Dans cet état, la station mobile peut déclencher l'établissement d'une connexion, normalement par accès au canal commun RACH, ou répondre à un signal de paging présent sur le canal PCH.

Une fois l'appel établi, la station mobile reçoit les canaux FCCH, SCH et BCCH non seulement de la station de base avec laquelle elle est raccordée mais aussi des stations de base voisines. Elle peut ainsi, selon les circonstances, se raccorder à la station de base la plus favorable au moment considéré.

Dans le cas d'un système de téléphonie mobile directe à accès multiple par division de temps, objet de la présente invention, il n'y a pas utilisation de stations de base qui diffusent une voie balise sur une fréquence particulière. Cependant, deux stations mobiles d'un tel système, l'une émettrice d'un appel sur une fréquence porteuse et l'autre réceptrice de cet appel, doivent toutefois, pour que la station mobile réceptrice puisse recevoir cet appel, se caler sur cette fréquence porteuse, et être temporellement synchronisées avec la station mobile émettrice. Ainsi, la station mobile émettrice émet non seulement ses données utilisateur mais aussi des données de calage en fréquence et de synchronisation en temps. De plus, la station mobile émettrice émet dans le *slot* s0 de certaines trames TDMA des données de désignation des multitrames utilisateur réservées pour les appels en cours sur cette fréquence porteuse. Dans la suite de la présente description, les données de calage en fréquence, de synchronisation et de désignation des multitrames utilisateur seront nommées données système.

Dans le cas où un tel système de téléphonie directe est basé sur les normes GSM, une station mobile émettrice émet dans un des *slots* s1 à s7 de chaque trame TDMA relative à une fréquence porteuse, des données utilisateur (canal logique TCH), dans le *slot* 0 de certaines trames TDMA, les données de calage en fréquence (canal FCCH) et dans le *slot* 0 d'autres trames TDMA, soit des données de synchronisation (canal SCH) soit des données de désignation des multitrames utilisateur réservées.

Dans un système de téléphonie directe TDMA, une station mobile réceptrice, à portée de stations mobiles émettrices, scrute chacune des fréquences porteuses que ces stations mobiles émettrices sont susceptibles d'utiliser pour émcttre, de manière à obtenir, pour chacune d'entre elles, les données système leur permettant ensuite d'entrer en communication avec n'importe laquelle de ces stations mobiles émettrices.

Dans le cas où un tel système de téléphonie est basé sur les normes GSM, la station mobile réceptrice chcrchera donc à obtenir pour chaque fréquence porteuse les données portées par la multitrame système M0.

Le problème que cherche à résoudre la présente invention est le suivant. Le fait de chercher à obtenir systématiquement les données système sur chaque fréquence porteuse sans s'assurer au préalable qu'au moins un appel est en cours sur cette fréquence porteuse allonge considérablement le temps de scrutation de chacune des fréquences porteuses et donc celui de la recherche de tous les appels en cours (sous-entendu sur toutes les fréquences porteuses reçues par la station mobile réceptrice).

Le problème résolu par la présente invention est donc de prévoir un procédé de recherche d'appels en cours qui permette d'accélérer le procédé de recherche ci-dessus en ne recherchant les données système uniquement si au moins un appel est en cours sur cette fréquence porteuse.

Le document GB 2,290,677 décrit un procédé de recherche d'appels effectué par une station mobile réceptrice d'un système de téléphonie directe du type où les données utilisateur et les données système sont émises par une station mobile émettrice au cours de *slots* qui divisent dans le temps l'utilisation d'une fréquence porteuse, la disposition temporelle desdits *slots* étant définie par une trame utilisée pour former des signaux qui sont modulés par ladite fréquence porteuse et qui sont destinés à transporter lesdites données utilisateur et lesdites données système. Le procédé comporte également une étape de mesure de niveau de champ au cours de laquelle le niveau de champ de l'un desdits signaux une fois reçus par ladite station mobile réceptrice est mesuré au moins une fois par *slot.*

Selon la présente invention, le procédé de recherche comporte, en outre, une étape de sélection de signaux reçus au cours de laquelle un signal reçu est sélectionné selon la mesure de son niveau de champs, et une étape de recherche de données système à partir d'un signal ainsi sélectionné.

Ces données système permettent à la station mobile réceptrice de caler sa fréquence de réception sur la fréquence porteuse relative au signal sélectionné, de se synchroniser en temps avec la station mobile émettrice, et ensuite d'obtenir la désignation des multitrames réservées pour les appels en cours sur cette fréquence porteuse.

Selon une variante de l'étape de mesure de niveaux de champ, au cours d'un même *slot* les niveaux de champ d'au moins deux signaux reçus relatifs à des fréquences porteuses différentes sont au moins mesurés une fois chacun.

Cette variante peut s'avérer particulièrement avantageuse dans le cas où le nombre de fréquences porteuses est grand, et donc dans le cas où un grand nombre de signaux est reçu. En effet, dans le cas où le niveau de champ d'un seul signal est mesuré au cours d'un *slot,* il faut attendre que le niveau de champ de tous les autres signaux ait été mesuré avant de pouvoir à nouveau mesurer le niveau de champ de ce premier signal. En mesurant le niveau de champ de plusieurs signaux au cours d'un même *slot,* la périodicité de mesure du niveau de champ d'un signal reçu est donc diminuée car le nombre de *slots* au cours desquels les mesures de champ sont effectuées est moindre.

Selon une variante de la présente invention, le procédé de recherche comporte, de plus, une étape de tri des signaux sélectionnés selon un ordre établi par un critère de tri qui est, d'une part, associé à chaque signal sélectionné et, d'autre part, évalué selon les mesures du niveau de champ de ce signal obtenues par durée de trame ou par durée de partie de trame.

Par exemple, le critère de tri est le nombre de mesures par durée de trame ou par durée de partie de trame qui est supérieur à ladite valeur de seuil.

Selon un autre exemple, le critère de tri est une valeur de niveau de champ obtenue à partir des mesures de champ obtenues par durée de trame ou par durée de partie de trame.

La présente invention concerne également un dispositif qui met en oeuvre un des procédés de recherche d'appel décrits ci-dessus..

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 qui est un schéma d'un exemple de trame TDMA du système GSM,
la Fig. 2 qui est un schéma qui représente les étapes du procédé de recherche d'appel selon la présente invention,
la Fig. 3 qui est un schéma qui représente un exemple de mesure de niveau de champ sur les *slots* d'une trame TDMA selon la présente invention, et
la Fig. 4 qui est un schéma d'un dispositif mettant en oeuvre le procédé de recherche d'appel selon la présente invention.

La Fig. 2 représente un schéma des étapes du procédé de recherche d'appel selon la présente invention. Le procédé débute par une étape 100 de mesure de niveau de champ suite à la réception par une station mobile réceptrice d'au moins un signal Tsgᵢ modulé par une fréquence porteuse fᵢ.

Au cours de l'étape 100, le niveau de champ d'au moins un signal Tsgᵢ est mesuré pendant un intervalle d'intégration Iₖ dont la durée est au plus égale à la durée d'un *slot* sⱼ (voir Fig. 3).

Une mesure du niveau de champ du signal Tsgᵢ sur un intervalle d'intégration Iₖ, notée P_{i,k}, peut être obtenue une fois par *slot* sⱼ si la durée de l'intervalle d'intégration . Iₖ est égale à la durée du *slot* sⱼ et, plusieurs mesures P_{i,k} sont obtenues au cours de chaque *slot* sⱼ si la durée de l'intervalle d'intégration Iₖ est inférieure à la durée du *slot* sⱼ.

Le nombre de mesures du niveau de champ Pᵢ,ₖ par durée de trame TR est donc égal au nombre de mesures par *slot* multiplié par le nombre de *slots* de cette trame. De même, le nombre de mesures du niveau de champ par durée de partie de trame PTR est le nombre de mesures par *slot* multiplié par le nombre de *slots* qui définissent cette partie de trame.

Selon l'exemple de la Fig.3, qui reprend l'exemple particulier d'un système de téléphonie directe basé sur les normes GSM, le nombre de mesure par *slot* est choisi égal à 5. Le nombre de mesures par durée de trame est donc de 40 (8x5). De même, dans le cas où une partie de trame est définie par deux *slots,* le nombre de mesures par durée de partie de trame est alors de 10 (2x5).

On peut noter que les stations mobiles émettrice et réceptrice n'étant pas encore synchronisées en temps, certaines mesures P_{i,k} peuvent être représentatives du niveau de champ de deux *slots* successifs qui appartiennent soit à une même trame soit à deux trames successives.

Selon un premier mode de réalisation de l'étape 100, plusieurs mesures par *slot* sont obtenues à partir du signal Tsgᵢ.

Selon un deuxième mode de réalisation de l'étape 100, correspondant au cas où au moins deux signaux Tsgᵢ et Tsgᵢ₊₁ modulés respectivement par les fréquences porteuses fᵢ et fᵢ₊₁ sont reçus par la station mobile réceptrice, les niveaux de champ des signaux Tsgᵢ et Tsgᵢ₊₁ sont au moins mesurés une fois chacun par *slot* sⱼ.

De retour à la Fig. 2, l'étape 100 est suivie d'une étape 200 de sélection des signaux reçus. Au cours de cette étape 200, chaque mesure P_{i,k} est comparée à une valeur de seuil VS prédéterminée. Un signal Tsgᵢ dont au moins une de ses mesures P_{i,k} est supérieure à la valeur du seuil VS est dit sélectionné et sera noté Tsg_{i,s}.

Selon une variante de la présente invention, l'étape 200 est suivie d'une étape 300 de tri des signaux sélectionnés Tsg_{i,s}. Au cours de l'étape 300 les signaux sélectionnés Tsg_{i,s} sont triés selon un ordre établi par un critère de tri CTᵢ. A chaque signal Tsg_{i,s} est associé une évaluation du critère de tri CTᵢ qui est calculée selon les mesures P_{i,,k} de son niveau de champ obtenues par durée de trame ou par durée de partie de trame.

Par exemple, le critère CTᵢ est le nombre de mesures P_{i,k} qui sont supérieures à la valeur du seuil VS.

Selon un autre exemple, le critère CTᵢ est une valeur de niveau de champ obtenue à partir des mesures P_{i,k}. Le critère de tri CTᵢ est, par exemple, la moyenne des mesures P_{i,k} ou le maximum des mesures P_{i,k}

De retour à la Fig. 2, le procédé de recherche d'appel selon la présente invention comporte également une étape 400 de recherche des données système à partir d'un signal sélectionné Tsg_{i,s}. Dans le cas d'un système de téléphonie directe basé sur les normes GSM, au cours de cette étape, les données de calage en fréquence F sont recherchées pour le signal Tsg_{i,s} de manière à ce que la station mobile réceptrice puisse caler sa fréquence de réception sur la fréquence porteuse fᵢ, et les données de synchronisation S sont recherchées pour le signal Tsg_{i,s} de manière à permettre la synchronisation en temps de la station mobile réceptrice avec la station mobile émettrice à l'origine de l'émission du signal sélectionné Tsg_{i,s}. Enfin, les données de désignation des multitrames utilisateur réservées sont recherchées de manière à ce que la station mobile réceptrice puisse identifier les multitrames qui sont réservées pour les appels en cours sur une fréquence porteuse.

On peut noter que, dans le cas où il est recherché tous les appels en cours auxquels une station mobile réceptrice est susceptible d'accéder quelle que soit la fréquence porteuse sur laquelle ils sont émis, chaque signal sélectionné Tsg_{i,s} est concerné par les étapes 100 à 400.

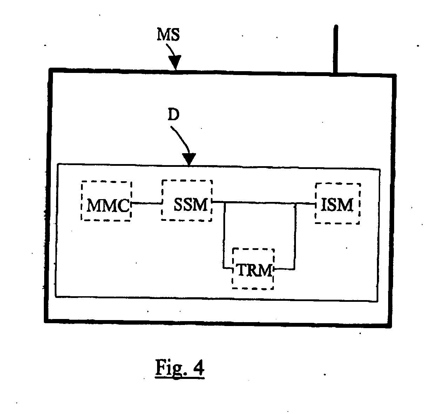

Selon son aspect matériel, illustré à la Fig. 4, la présente invention concerne un dispositif D de recherche d'appel implanté par une station mobile réceptrice MS d'un système de téléphonie direct du type décrit ci-dessus. Le dispositif D est caractérisé en ce qu'il comporte
- des moyens MMC pour mesurer au moins une fois par *slot* un niveau de champ d'un signal reçu par ladite station mobile réceptrice, et
- des moyens SSM pour sélectionner un signal reçu si au moins une mesure de son niveau de champ est supérieure à la valeur de seuil VS.

Selon une variante de ce dispositif, le dispositif D comporte également des moyens TRM pour trier lesdits signaux ainsi sélectionnés selon un ordre établi par le critère de tri CTi.

Selon la présente invention, le dispositif D comporte également des moyens ISM pour rechercher les données système relatives à un signal sélectionné.

## Revendications

1. Procédé de recherche d'appel effectué par une station mobile réceptrice d'un système de téléphonie directe du type où les données utilisateur et les données système sont émises par une station mobile émettrice au cours de *slots* qui divisent dans le temps l'utilisation d'une fréquence porteuse, la disposition temporelle desdits *slots* étant définie par une trame utilisée pour former des signaux qui sont modulés par ladite fréquence porteuse et qui sont destinés à transporter lesdites données utilisateur et lesdites données système, ledit procédé comportant une étape (100) de mesure de niveau de champ au cours de laquelle le niveau de champ de l'un desdits signaux une fois reçus par ladite station mobile réceptrice est mesuré au moins une fois par *slot,* **caractérisé en ce qu'**il comporte
une étape (200) de sélection de signaux reçus au cours de laquelle un signal reçu est sélectionné selon la mesure de son niveau de champs, et
une étape (400) de recherche de données système à partir d'un signal ainsi sélectionné.

2. Procédé de recherche d'appel selon la revendication 1, **caractérisé en ce que**, au cours d'un même *slot,* les niveaux de champ d'au moins deux signaux reçus relatifs à des fréquences porteuses différentes sont au moins mesurés une fois chacun.

3. Procédé de recherche d'appel selon la revendication 1 ou 2, **caractérisé en ce qu'**il comporte, en outre, qu'au cours de ladite étape (200) de sélection de signaux reçus un signal reçu est sélectionné si au moins une mesure de son niveau de champ est supérieure à une valeur de seuil prédéterminée (VS).

4. Procédé de recherche d'appel selon la revendication 3, **caractérisé en ce qu'**il comporte une étape (300) de tri des signaux sélectionnés selon un ordre établi par un critère de tri qui est, d'une part, associé à chaque signal sélectionné et, d'autre part, évalué selon les mesures du niveau de champ de ce signal obtenues par durée de ladite trame ou par durée de partie de ladite trame.

5. Procédé de recherche d'appel selon la revendication 4, **caractérisé en ce que** le critère de tri est le nombre de mesures par durée de ladite trame ou par durée de partie de ladite trame qui sont supérieures à ladite valeur de seuil (VS).

6. Procédé de recherche d'appel selon la revendication 4, **caractérisé en ce que** le critère de tri est une valeur de niveau de champ obtenue à partir des mesures de champ obtenues par durée de ladite trame ou par durée de ladite partie de trame.

7. Dispositif de recherche d'appel implanté par une station mobile réceptrice d'un système de téléphonie directe du type où les données utilisateur et les données système sont émises par une station mobile émettrice au cours de *slots* qui divisent dans le temps l'utilisation d'une fréquence porteuse, la disposition temporelle desdits *slots* étant définie par une trame utilisée pour former des signaux qui sont modulés par ladite fréquence porteuse et qui sont destinés à transporter lesdites données utilisateur et lesdites données système, ledit dispositif comportant des moyens (MMC) pour mesurer au moins une fois par *slot* un niveau de champ d'un signal reçu par ladite station mobile réceptrice, **caractérisé en ce qu'**il comporte
des moyens (SSM) pour sélectionner un signal reçu en fonction d'une mesure de son niveau de champs, et
des moyens (ISM) pour rechercher les données système relatives à un signal ainsi sélectionné.

8. Dispositif de recherche d'appel selon la revendication 7, **caractérisé en ce que**, au cours d'un même *slot,* les niveaux de champ, d'au moins deux signaux reçus relatifs à des fréquences porteuses différentes sont au moins mesurés une fois chacun.

9. Dispositif de recherche d'appel selon la revendication 7 ou 8, **caractérisé en ce que** lesdits moyens (SSM) pour sélectionner sélectionne un signal reçu si au moins une mesure de son niveau de champ est supérieure à une valeur de seuil prédéterminée (VS).

10. Dispositif de recherche d'appel selon la revendication 9, **caractérisé en ce qu'**il comporte également des moyens (TRM) pour trier lesdits signaux ainsi sélectionnés selon un ordre établi par le critère de tri.

## Claims

1. Method of searching for a call, carried out by a mobile receiving station of a direct telephony system of the type in which the user data and system data are transmitted by a mobile transmitting station in the course of slots which divide, in time, the use of a carrier frequency, the arrangement of said slots in time being defined by a frame which is used to form signals which are modulated by said carrier frequency, and which are intended to carry said user data and said system data, said method including a stage (100) for measuring a field level, in the course of which the field level of one of said signals, once it has been received by said mobile receiving station, is measured at least once per slot, **characterized in that** it includes
- a stage (200) for selecting received signals, in the course of which a received signal is selected according to the measurement of its field level, and
- a stage (400) for searching for system data from a signal which is selected in this way.

2. Method of searching for a call according to Claim 1, **characterized in that** in the course of a single slot, the field levels of at least two signals which are received relative to different carrier frequencies are at least measured once each.

3. Method of searching for a call according to Claim 1 or 2, **characterized in that** it also includes, in the course of said stage (200) for selecting received signals, a received signal being selected if at least one measurement of its field level is greater than a predetermined threshold value (VS).

4. Method of searching for a call according to Claim 3, **characterized in that** a stage (300) for sorting selected signals according to an order which is established by a sort key which, on the one hand, is associated with each selected signal, and on the other hand is evaluated according to measurements of the field level of this signal, said measurements being obtained per duration of said frame or per duration of part of said frame.

5. Method of searching for a call according to Claim 4, **characterized in that** the sort key is the number of measurements per duration of said frame or per duration of part of said frame which are greater than said threshold value (VS).

6. Method of searching for a call according to Claim 4, **characterized in that** the sort key is a field level value which is obtained from field measurements which are obtained per duration of said frame or per duration of said part of frame.

7. Device for searching for a call, implemented by a mobile receiving station of a direct telephony system of the type in which the user data and system data are transmitted by a mobile transmitting station in the course of slots which divide, in time, the use of a carrier frequency, the arrangement of said slots in time being defined by a frame which is used to form signals which are modulated by said carrier frequency, and which are intended to carry said user data and said system data, said device including means (MMC) for measuring, at least once per slot, a field level of a signal which is received by said mobile receiving station, **characterized in that** it includes
- means (SSM) for selecting a received signal as a function of a measurement of its field level, and
- means (ISM) for searching for system data which is related to a signal selected in this way.

8. Device for searching for a call according to Claim 7, **characterized in that** in the course of a single slot, the field levels of at least two signals which are received relative to different carrier frequencies are at least measured once each.

9. Device for searching for a call according to Claim 7 or 8, **characterized in that** said means (SSM) for selecting select a received signal if at least one measurement of its field level is greater than a predetermined threshold level (VS).

10. Device for searching for a call according to Claim 9, **characterized in that** it also includes means (TRM) for sorting said thus selected signals according to an order which is established by the sort key.

## Patentansprüche

1. Verfahren zum Suchen eines Anrufs, der von einer empfangenden Mobilstation eines direkten Telefoniesystems des Typs getätigt wird, beim dem die Benutzerdaten und die Systemdaten von einer sendenden Mobilstation im Laufe von *Slots* gesendet werden, die den Gebrauch einer Trägerfrequenz zeitlich unterteilen, wobei die zeitliche Anordnung der *Slots* durch einen Rahmen definiert ist, der verwendet wird, um Signale zu erzeugen, die von der Trägerfrequenz moduliert werden und die dazu bestimmt sind, die Benutzerdaten und die Systemdaten zu transportieren, wobei das Verfahren einen Schritt (100) des Messens des Feldstärkepegels aufweist, während dem der Feldstärkepegel eines der Signale, sobald sie von der empfangenden Mobilstation empfangen wurden, mindestens einmal pro *Slot* gemessen wird, **dadurch gekennzeichnet, dass** es Folgendes aufweist
einen Schritt (200) des Auswählens empfangener Signale, während dem ein empfangenes Signal gemäß der Messung seines Feldstärkepegels ausgewählt wird, und
einen Schritt (400) des Suchens von Systemdaten ausgehend von einem derart ausgewählten Signal.

2. Verfahren zum Suchen eines Anrufs nach Anspruch 1, **dadurch gekennzeichnet, dass** die Feldstärkepegel von mindestens zwei empfangenen Signalen in Zusammenhang mit unterschiedlichen Trägerfrequenzen im Laufe eines gleichen *Slot* jeweils mindestens einmal gemessen werden.

3. Verfahren zum Suchen eines Anrufs nach Anspruch 1 oder 2, **dadurch gekennzeichnet, dass** es ferner aufweist, dass im Laufe des Schritts (200) des Auswählens empfangener Signale ein empfangenes Signal ausgewählt wird, wenn mindestens eine Messung seines Feldstärkepegels größer ist als ein vorbestimmter Schwellenwert (VS).

4. Verfahren zum Suchen eines Anrufs nach Anspruch 3, **dadurch gekennzeichnet, dass** es einen Schritt (300) des Sortierens der ausgewählten Signale gemäß einer von einem Sortierkriterium erstellten Reihenfolge aufweist, die einerseits mit jedem ausgewählten Signal verbunden ist und andererseits gemäß den Messungen des Feldstärkepegels dieses Signals, die pro Dauer des Rahmens oder pro Dauer eines Teils des Rahmens erzielt werden, bewertet wird.

5. Verfahren zum Suchen eines Anrufs nach Anspruch 4, **dadurch gekennzeichnet, dass** das Sortierkriterium die Anzahl von Messungen pro Dauer des Rahmens oder pro Dauer eines Teils des Rahmens ist, die größer sind als der Schwellenwert (VS).

6. Verfahren zum Suchen eines Anrufs nach Anspruch 4, **dadurch gekennzeichnet, dass** das Sortierkriterium ein Feldstärkepegelwert ist, der ausgehend von den Feldstärkemessungen erzielt wird, die pro Dauer des Rahmens oder pro Dauer eines Teils des Rahmens erzielt werden.

7. Vorrichtung zum Suchen eines Anrufs, die von einer empfangenden Mobilstation eines direkten Telefoniesystems des Typs umgesetzt wird, bei dem die Benutzerdaten und die Systemdaten von einer sendenden Mobilstation im Laufe von *Slots* gesendet werden, die den Gebrauch einer Trägerfrequenz zeitlich unterteilen, wobei die zeitliche Anordnung der *Slots* von einem Rahmen definiert ist, der verwendet wird, um Signale zu bilden, die von der Trägerfrequenz moduliert werden und die dazu bestimmt sind, die Benutzerdaten und die Systemdaten zu transportieren, wobei die Vorrichtung Mittel (MMC) zum Messen mindestens einmal pro *Slot* eines Feldstärkepegels eines von der empfangenden Mobilstation empfangenen Signals aufweist, **dadurch gekennzeichnet, dass** sie Folgendes aufweist
Mittel (SSM) zum Auswählen eines empfangenen Signals in Abhängigkeit von einer Messung seines Feldstärkepegels und
Mittel (ISM) zum Suchen der Systemdaten in Zusammenhang mit einem derart ausgewählten Signal.

8. Vorrichtung zum Suchen eines Anrufs nach Anspruch 7, **dadurch gekennzeichnet, dass** die Feldstärkepegel von mindestens zwei empfangenen Signalen in Zusammenhang mit unterschiedlichen Trägerfrequenzen im Laufe eines gleichen *Slot* jeweils einmal gemessen werden.

9. Vorrichtung zum Suchen eines Anrufs nach Anspruch 7 oder 8, **dadurch gekennzeichnet, dass** die Mittel (SSM) zum Auswählen ein empfangenes Signal auswählen, wenn mindestens eine Messung seines Feldstärkepegels größer ist als ein vorbestimmter Schwellenwert (VS).

10. Vorrichtung zum Suchen eines Anrufs nach Anspruch 9, **dadurch gekennzeichnet, dass** sie auch Mittel (TRM) zum Sortieren der derart ausgewählten Signale gemäß einer durch das Suchkriterium erstellten Reihenfolge aufweist.
